# EUROPÄISCHE PATENTSCHRIFT

(11) **EP 4 392 315 B1**
(45) Veröffentlichungstag und Bekanntmachung des Hinweises auf die Patenterteilung: **06.05.2026**
(21) Anmeldenummer: 22764784.9
(22) Anmeldetag: 15.08.2022
(51) Int. Cl.: B62K 21/10

(54) **VERFAHREN UND VORRICHTUNG ZUR UNTERSTÜTZUNG EINES SCHIEBEMODUS' EINES FAHRRADES**
METHOD AND DEVICE FOR SUPPORTING A WALK MODE OF A BICYCLE
PROCÉDÉ ET DISPOSITIF PRENANT EN CHARGE UN MODE DE MARCHE D'UNE BICYCLETTE

(30) Priorität: 23.08.2021 DE 102021209232
(43) Veröffentlichungstag der Anmeldung: 03.07.2024
(73) Patentinhaber: Robert Bosch GmbH, 70442 Stuttgart (DE)
(72) Erfinder: GABRIEL, David, 72141 Walddorfhaeslach (DE)
(86) Internationale Anmeldenummer: PCT/EP2022/072772
(87) Internationale Veröffentlichungsnummer: WO 2023/025610

(56) Entgegenhaltungen:
- EP-A1- 2 829 464
- DE-A1- 102013 214 517
- DE-A1- 102017 212 117

## Beschreibung

### Stand der Technik

Die vorliegende Erfindung betrifft ein Verfahren und eine Vorrichtung zur Unterstützung eines Schiebemodus' eines Fahrrades.

Aus dem Stand der Technik sind Elektrofahrräder bekannt, die geeignet sind, Benutzer solcher Elektrofahrräder in einem Schiebemodus der Elektrofahrräder durch eine Anpassung einer Antriebsunterstützung zu unterstützen.

DE 102018212453 A1 beschreibt u. a. ein Regelverfahren zur Anpassung eines Fahrverhaltens eines Elektrofahrrads beim Schieben des Elektrofahrrads, wobei auf Basis eines ermittelten Lenkwinkels eines Lenkers des Elektrofahrrades, einer erfassten Geschwindigkeit des Elektrofahrrades und einem Aktivierungszustand der Schiebehilfefunktion, eine Regelung eines Antriebsmotors des Elektrofahrrades zur Anpassung einer Geschwindigkeit und/oder einer Beschleunigung des Elektrofahrrades ausgeführt wird. Ferner wird auf die Druckschriften DE 10 2013 214 517 A1 und DE 10 20 2017 212117 A1 verwiesen.

### Offenbarung der Erfindung

Gemäß einem ersten Aspekt der vorliegenden Erfindung wird ein Verfahren zur Unterstützung eines Schiebemodus' eines Fahrrades mit den Merkmalen des Anspruchs 1 vorgeschlagen. Ferner eine Vorrichtung eingerichtet das Verfahren auszuführen und ein Fahrrad mit einer derartigen Vorrichtung. Das Fahrrad ist beispielsweise ein ausschließlich durch Muskelkraft angetriebenes Fahrrad und/oder ein Fahrrad mit einer Antriebsunterstützung basierend auf einem Motor wie e-Bikes, Pedelecs, usw. Unter "Schiebemodus" soll ein Modus verstanden werden, in welchem das Fahrrad durch einen Benutzer vorzugsweise ohne eine Unterstützung durch einen Antriebsmotor des Fahrrades bewegt wird. Eine Verwendung einer solchen Unterstützung durch einen Antriebsmotor im Zusammenhang mit dem erfindungsgemäßen Verfahren ist aber zusätzlich möglich.

In einem ersten Schritt der erfindungsgemäßen Verfahren wird eine aktuelle Geschwindigkeit des Fahrrades ermittelt. Das Ermitteln erfolgt beispielsweise auf Basis einer Auswerteeinheit des Fahrrades, welche vorzugsweise informationstechnisch mit einer geeigneten Sensorik des Fahrrades verbunden ist. Die Sensorik zur Erfassung der aktuellen Geschwindigkeit weist beispielsweise einen Reed-Sensor und/oder einen ABS-Sensor und/oder einen GPS-Sensor und/oder einen davon abweichenden Sensor auf. Darüber hinaus ist es möglich, die aktuelle Geschwindigkeit auf Basis eines Zustandsschätzers (z. B. auf Basis eines Kalman-Filters) zu ermitteln.

In einem zweiten Schritt des erfindungsgemäßen Verfahrens wird ein aktueller Neigungswinkel des Fahrrades ermittelt. Dies erfolgt beispielsweise ebenfalls auf Basis der Auswerteeinheit in Verbindung mit einer weiteren Sensorik wie einem Intertialsensor, welcher vorzugsweise einen Beschleunigungssensor und ein Gyroskop aufweist, ohne auf eine solche Sensorik eingeschränkt zu sein. Darüber hinaus ist es möglich, den aktuellen Neigungswinkel auf Basis eines weiteren Zustandsschätzers (z. B. auf Basis eines weiteren Kalman-Filters) zu ermitteln.

In einem dritten Schritt des erfindungsgemäßen Verfahrens wird ein Lenkaktor des Fahrrades in einem Schiebemodus angesteuert, um einen Lenkwinkel des Fahrrads basierend auf einer Information über die aktuelle Geschwindigkeit und den aktuellen Neigungswinkel einzustellen. Dies wird beispielsweise durch eine informationstechnische Anbindung der Auswertungseinheit an den Lenkaktor erreicht. Der Lenkaktor wird beispielsweise mittels einer Lenkratenvorgabe und/oder Lenkwinkelvorgabe und/oder einer Lenkmomentvorgabe angesteuert.

Es sei darauf hingewiesen, dass das Einstellen des Lenkwinkels nicht bedingt, dass der Lenkwinkel als Stellgröße für das erfindungsgemäße Verfahren anzuwenden ist, stattdessen können grundsätzlich beliebige Stellgrößen eingesetzt werden, welche in einer Einstellung bzw. einer Anpassung des Lenkwinkels des Fahrrades resultieren.

Das erfindungsgemäße Verfahren bietet unter anderem den Vorteil, dass ein Benutzer des Fahrrades das Fahrrad in einem Schiebemodus beispielsweise mit nur einer Hand führen kann (z. B. am Sattel oder am Gepäckträger), was insbesondere einen aufrechten und/oder ergonomischen Gang ermöglicht.

Die Unteransprüche zeigen bevorzugte Weiterbildungen der Erfindung.

In einer vorteilhaften Ausgestaltung der vorliegenden Erfindung bewirkt das Ansteuern des Lenkaktors ein Einstellen eines Soll-Lenkwinkels des Fahrrades, der basierend auf einer vordefinierten Abbildungsvorschrift ermittelt wird, welche jeweilige Geschwindigkeits- und Neigungswinkelwerte auf jeweilige Soll-Lenkwinkelwerte abbildet. Die Abbildungsvorschrift ist beispielsweise in Form eines Kennfeldes und/oder einer Nachschlagetabelle (engl. "lookup-table") in einer informationstechnisch an die Auswerteeinheit angebundenen Speichereinheit abgelegt, sodass sie durch die Auswerteeinheit bei Bedarf abrufbar und verwendbar ist. Die Abbildungsvorschrift stellt beispielsweise lineare oder nichtlineare Zusammenhänge zwischen jeweiligen Geschwindigkeits- und Neigungswinkelwerten und jeweiligen Soll-Lenkwinkelwerten her. Zudem ist es möglich, dass die Abbildungsvorschrift auf einer abschnittsweise definierten Funktion basiert. Die Vorteile der hier beschriebenen Ausgestaltung der vorliegenden Erfindung äußern sich zum einen darin, dass das Fahrrad im Schiebemodus allein mittels eines durch den Benutzer herbeigeführten Neigevorgangs entlang vorausliegender Kurven lenkbar ist, ohne dass ein Lenker des Fahrrades durch den Benutzer betätigt werden muss. Ein besonders intuitiver und/oder ergonomischer Schiebemodus gemäß der hier vorliegenden vorteilhaften Ausgestaltung lässt sich beispielsweise dadurch erzielen, dass die Abbildungsvorschrift derart festgelegt wird, dass eine Neigung des Fahrrades in Richtung eines Krümmungsmittelpunktes der Kurve zu einer Anpassung des Lenkwinkels in Richtung des Kurvenverlaufs führt. Durch eine Korrelation zwischen einer Stärke der Neigung und einer Höhe einer Auslenkung des Lenkers lässt sich der Schiebemodus noch intuitiver und ergonomischer ausgestalten. Zum anderen ergibt sich ein Vorteil der hier beschriebenen Ausgestaltung dadurch, dass evtl. dem Fahrrad vorausliegende Hindernisse wie Bordsteinkanten, auf dem Weg liegende Steine/Kiesel usw. nicht zu einer ungewollten Änderung des Lenkwinkels führen, da der Lenkwinkel durch den Lenkaktor vorzugsweise auch dann konstant gehalten bzw. kurzfristig wiederhergestellt wird, wenn Störkräfte auf ein Vorderrad des Fahrrades einwirken.

In einer weiteren vorteilhaften Ausgestaltung der vorliegenden Erfindung erfolgt das Ansteuern des Lenkaktors basierend auf einer Regelung, um den Neigungswinkel des Fahrrades auf einen vordefinierten Wert, insbesondere auf einen Wert von 0° zu regeln. Unter einem Neigungswinkel von 0° soll hier ein Neigungswinkel des Fahrrades verstanden werden, unter dem eine Hochachse des Fahrrades rechtwinklig zu einer Horizontalebene ausgerichtet ist. Für eine solche Regelung lassen sich unterschiedliche Regelalgorithmen einsetzen, wie zum Beispiel ein PID-Regler, ein LQ-Regler oder ein davon abweichender Regler. Dies bietet den Vorteil, dass sich das Fahrrad während eines Schiebemodus' selbst stabilisiert und die Stabilisierung nicht durch den Benutzer ausgeführt werden muss. Hierdurch lassen sich u. a. ein Komfort und/oder ein besonders ergonomischer Schiebemodus erzielen.

Besonders vorteilhaft wird bei der Regelung eine Information über eine erfasste Neigungsrate des Fahrrades berücksichtigt. Alternativ oder zusätzlich wird als Stellgröße zur Regelung des Neigungswinkels eine Lenkrate und/oder ein Lenkmoment verwendet wird.

Weiter vorteilhaft stellt die Regelung als Reaktion auf eine Störkraft, die zur Neigungsänderung des Fahrrads geeignet ist, eine Kurvenfahrt des Fahrrads ein, um die Störkraft zu kompensieren und die Neigung auf dem vordefinierten Wert zu halten oder zu dem vordefinierten Wert zu führen. Mit anderen Worten bewirkt eine solche Regelung, dass das Fahrrad stets aufrecht fährt, auch wenn seitliche Störkräfte vorliegen. Dies lässt sich beispielsweise nutzen, um eine Kurvenfahrt zu erzwingen, welche der schiebende Benutzer durch einen seitlichen Druck gegen das Fahrrad (also eine gewollte "Störkraft") verursacht. Entsprechend muss die Regelung eingerichtet sein, der Störkraft entgegenzuwirken, um das Fahrrad aufrecht zu halten. Dies geschieht entsprechend durch ein Einleiten einer Kurvenfahrt, welche eine Fliehkraft bewirkt, die der Störkraft entgegenwirkt. Je größer die Störkraft ist, desto größer muss dementsprechend auch die entgegenwirkende Fliehkraft sein. Das bedeutet, dass der Kurvenradius abhängig von der aufgebrachten Störkraft ist. Wird durch den Benutzer seitlich nur schwach gedrückt, so wird der Kurvenradius entsprechend groß und das Fahrrad fährt eine weite Kurve. Ist der seitliche Druck gegen das Fahrrad hingegen groß, so wird der gefahrene Kurvenradius klein und es wird entsprechend eine enge Kurve gefahren.

In einer weiteren Ausgestaltung der vorliegenden Erfindung wird zusätzlich ein aktueller Lenkwinkel und/oder eine aktuelle Lenkrate des Fahrrades ermittelt. Zudem wird die Information über den aktuellen Lenkwinkel und/oder die Lenkrate bei der Ansteuerung des Lenkaktors berücksichtigt, um eine Steuerung und/oder Regelung des Lenkaktors zu verbessern.

Vorteilhaft wird der aktuelle Lenkwinkel auf Basis einer aktuellen Gierrate, auf Basis von Fahrradparametern, welche insbesondere einen Radstand und/oder einen Lenkkopfwinkel und/oder einen Nachlauf des Fahrrades beinhalten und auf Basis der aktuellen Geschwindigkeit ermittelt.

Bevorzugt wird eine maximale Auslenkung des Lenkers des Fahrrades durch den Lenkaktor, auf einen vordefinierten maximal zulässigen Lenkwinkelbereich beschränkt. Ein solcher Lenkwinkelbereich liegt beispielsweise zwischen ±45° und ±60°, ohne dadurch auf einen solchen Bereich eingeschränkt zu sein. Durch eine solche Begrenzung lassen sich evtl. auftretende Probleme durch zu starke Lenkungseinschläge reduzieren bzw. verhindern.

Weiter bevorzugt werden eine oder mehrere verwendete Messgrößen (z. B. ein Lenkwinkel, eine Geschwindigkeit, usw.) und/oder Ausgangsgrößen (z. B. ein Soll-Lenkwinkel) mittels einer Tiefpassfilterung geglättet, um u. a. unerwünschte ruckartige und/oder überhöhte Anpassungen des Lenkwinkels und dergleichen zu vermeiden.

Vorzugsweise wird das Verfahren zur Unterstützung des Schiebemodus' nur dann ausgeführt, wenn die aktuelle Geschwindigkeit einen ersten vordefinierten Schwellenwert (z. B. eine maximal zulässige Geschwindigkeit für den Schiebemodus) nicht überschreitet. Alternativ oder zusätzlich wird das Verfahren unter Verwendung einer ersten vordefinierten Ansteuerungsmethode für den Lenkaktor ausgeführt, wenn die aktuelle Geschwindigkeit den ersten Geschwindigkeitsschwellenwert nicht überschreitet und einen zweiten vordefinierten Schwellenwert überschreitet oder diesem entspricht, wobei der zweite Schwellenwert kleiner ist, als der erste Schwellenwert. Weiter alternativ oder zusätzlich wird das Verfahren unter Verwendung einer von der ersten vordefinierten Ansteuerungsmethode abweichenden zweiten Ansteuerungsmethode (z. B. eine an niedrige Geschwindigkeiten angepasste Methode) für den Lenkaktor ausgeführt oder nicht ausgeführt, wenn die aktuelle Geschwindigkeit unterhalb des zweiten Schwellenwertes liegt.

Vorteilhaft wird das Verfahren zur Unterstützung des Schiebemodus' nur dann aktiviert, wenn eine Freigabe für diese Unterstützungsfunktion mittels einer Eingabe durch einen Benutzer des Fahrrades vorliegt und/oder wenn ein vordefinierter Neigungswinkel des Fahrrades nicht überschritten wird und/oder wenn die aktuelle Geschwindigkeit des Fahrrades innerhalb eines vordefinierten zulässigen Aktivierungsgeschwindigkeitsbereichs liegt. Durch eine solche Begrenzung des Neigungswinkels und/oder des zulässigen Geschwindigkeitsbereichs für eine Aktivierung der Unterstützungsfunktion, lässt sich beispielsweise sicherstellen, dass das Fahrrad durch einen ansonsten ggf. notwendigen starken Regelungseingriff zur Kompensation der Neigung und/oder der Geschwindigkeit nicht unkontrolliert zu kippen beginnt.

In einer weiteren Ausgestaltung der vorliegenden Erfindung wird wenigstens im Ansprechen auf eine automatische Deaktivierung der Unterstützungsfunktion für den Schiebemodus und/oder wenigstens zu einem vordefinierten Zeitpunkt vor der automatischen Deaktivierung der Unterstützungsfunktion ein Hinweis an einen Benutzer des Fahrrades ausgegeben. Ein solcher Hinweis wird beispielsweise akustisch und/oder optisch und/oder haptisch ausgegeben. Dadurch wird sichergestellt, dass ein Benutzer des Fahrrades stets auf die Deaktivierung der Unterstützungsfunktion vorbereitet wird, so dass er sich auf eine vollständige Übernahme des Schiebemodus einstellen kann.

Gemäß einem zweiten Aspekt der vorliegenden Erfindung wird eine Vorrichtung zur Unterstützung eines Schiebemodus' eines Fahrrades vorgeschlagen. Die Vorrichtung weist auf: einen Geschwindigkeitssensor, einen Neigungswinkelsensor, einen Lenkaktor und eine Auswerteeinheit. Es sei darauf hingewiesen, dass der Geschwindigkeitssensor und/oder der Neigungswinkelsensor geeignete Zustandsschätzer zum Ermitteln jeweiliger Messgrößen aufweisen können. Die Auswerteeinheit ist beispielsweise als ASIC, FPGA, Prozessor, digitaler Signalprozessor, Mikrocontroller, o. ä., ausgestaltet. Ferner ist die Auswerteeinheit beispielsweise mit einer intern und/oder extern angebundenen Speichereinheit informationstechnisch verbunden. Die Auswerteeinheit ist eingerichtet, auf Basis des Geschwindigkeitssensors eine aktuelle Geschwindigkeit des Fahrrades zu ermitteln und auf Basis des Neigungswinkelsensors einen aktuellen Neigungswinkel des Fahrrades zu ermitteln. Zudem ist die Auswerteeinheit eingerichtet, einen Lenkaktor des Fahrrads in einem Schiebemodus zum Einstellen eines Lenkwinkels des Fahrrads basierend auf einer Information über die aktuelle Geschwindigkeit und den aktuellen Neigungswinkel anzusteuern. Die Merkmale, Merkmalskombinationen sowie die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: ein beispielhaftes Flussdiagramm veranschaulichend Verfahrensschritte gemäß einer ersten Ausführungsform der vorliegenden Erfindung;
- Figur 2: ein beispielhaftes Flussdiagramm veranschaulichend Verfahrensschritte gemäß einer zweiten Ausführungsform der vorliegenden Erfindung; und
- Figur 3: eine schematische Ansicht einer erfindungsgemäßen Vorrichtung in Verbindung mit einem Fahrrad.

### Ausführungsformen der Erfindung

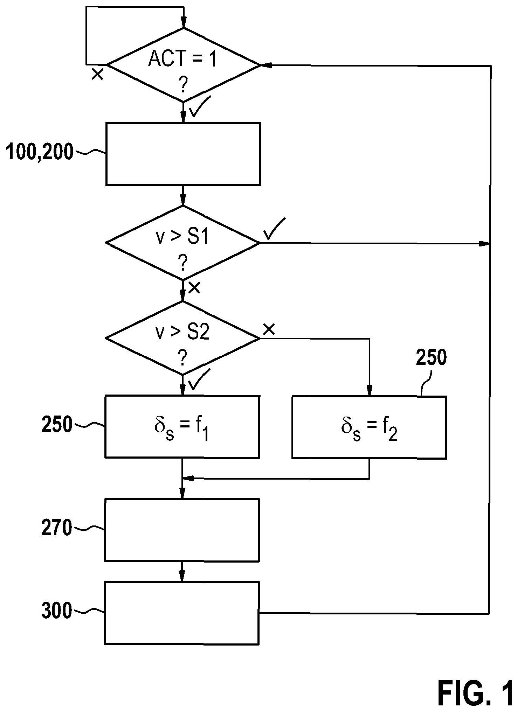

Figur 1 zeigt ein beispielhaftes Flussdiagramm veranschaulichend Verfahrensschritte gemäß einer ersten Ausführungsform der vorliegenden Erfindung.

Zunächst wird im Flussdiagramm ein Aktivierungsstatus ACT für eine erfindungsgemäße Unterstützung eines Schiebemodus' eines Fahrrades überprüft. Der Status lässt sich durch eine Benutzereingabe an einem Bedienelement des Fahrrades aktivieren (ACT = 1) oder deaktivieren (ACT = 0).

Für den Fall, dass der Aktivierungsstatus "1" entspricht, wird nachfolgend im Schritt 100 eine aktuelle Geschwindigkeit v des Fahrrades ermittelt. Zudem wird im Schritt 200 ein aktueller Neigungswinkel φ des Fahrrades ermittelt.

Für den Fall, dass die aktuelle Geschwindigkeit v größer als ein vordefinierter erster Schwellenwert S1 ist, welcher hier einem Wert von 10 km/h entspricht, ist eine obere Geschwindigkeitsschwelle überschritten, bei welcher nicht mehr von einem Schiebemodus des Fahrrades, sondern von einem Fahrmodus auszugehen ist, weshalb in diesem Fall keine weiteren Verfahrensschritte zur Unterstützung des Schiebemodus' ausgeführt werden.

Für den Fall, dass der erste Schwellenwert S1 nicht überschritten wird, wird im Schritt 250 überprüft, ob die aktuelle Geschwindigkeit v einen zweiten vordefinierten Schwellenwert S2 überschreitet, welcher hier einem Wert von 3 km/h entspricht. In dem Fall, in dem der zweite Schwellenwert S2 überschritten wird, wird auf Basis der aktuellen Geschwindigkeit v, auf Basis des aktuellen Neigungswinkels und auf Basis einer ersten vordefinierten Abbildungsvorschrift f₁ ein Soll-Lenkwinkel δₛ ermittelt, wobei mittels der ersten Abbildungsvorschrift f₁ jeweilige Geschwindigkeits- und Neigungswinkelwerte auf jeweilige Soll-Lenkwinkelwerte abgebildet werden. Falls die aktuelle Geschwindigkeit v kleiner oder gleich dem zweiten Schwellenwert S2 ist, wird der Soll-Lenkwinkel δₛ hingegen auf Basis der aktuellen Geschwindigkeit v, auf Basis des aktuellen Neigungswinkels und auf Basis einer zweiten vordefinierten Abbildungsvorschrift f₂ ermittelt, welche von der ersten Abbildungsvorschrift f₁ abweicht.

Durch das Verwenden unterschiedlicher Abbildungsvorschriften f₁, f₂ für unterschiedliche Geschwindigkeitsbereiche ist es vorteilhaft möglich, an jeweilige Geschwindigkeitsbereiche optimal angepasste Abbildungsvorschriften f₁, f₂ einzusetzen, um einen Komfort, eine Sicherheit und eine Ergonomie bei aktiver Unterstützung des Schiebemodus' zu erhöhen.

Im nachfolgenden Schritt 270 werden aufeinanderfolgend ermittelte Soll-Lenkwinkelwerte δₛ mittels eines Tiefpassfilters gefiltert, um eine Glättung evtl. vorhandener, unerwünschter Sprünge von Soll-Lenkwinkelwerten δₛ herbeizuführen.

Schließlich wird im Schritt 300 ein Lenkaktor 10 des Fahrrades in einem Schiebemodus zum Einstellen des Soll-Lenkwinkels (δ) des Fahrrades angesteuert.

Auf diese Weise wird eine Unterstützungsfunktion in einem Schiebemodus des Fahrrades bereitgestellt, welche aktuelle Fahrradneigungen φ und Geschwindigkeiten v in jeweils geeignete Lenkwinkel δ überführen, so dass ein besonders ergonomischer Schiebemodus für einen Benutzer des Fahrrades, welcher insbesondere eine Einhandnutzung erlaubt, erzielt wird.

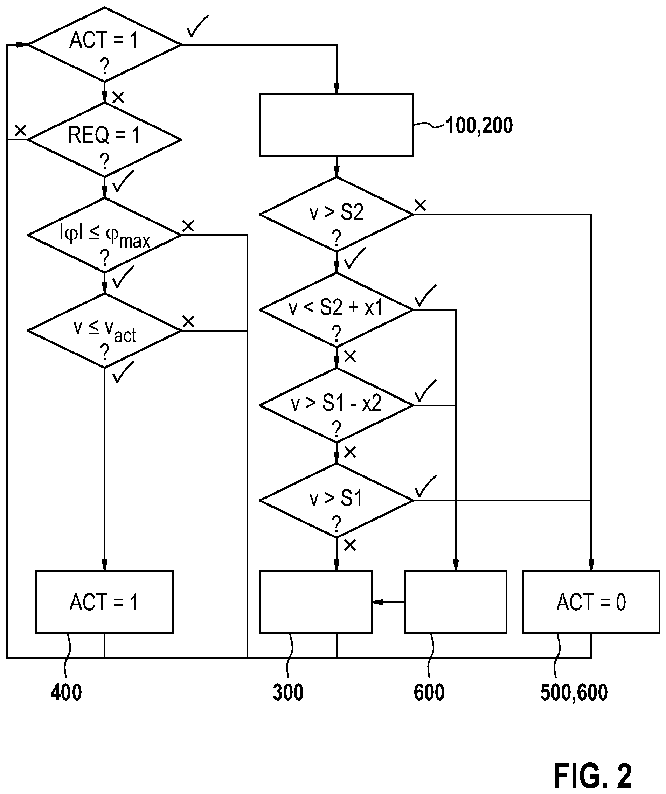

Figur 2 zeigt ein beispielhaftes Flussdiagramm veranschaulichend Verfahrensschritte gemäß einer zweiten Ausführungsform der vorliegenden Erfindung. Die hier beschriebenen Verfahrensschritte erzeugen eine Ansteuerung eines Lenkaktors 10 eines Fahrrades basierend auf einer Regelung, um einen Neigungswinkel φ des Fahrrades in einem Schiebemodus auf einen vordefinierten Wert zu regeln welcher hier 0° entspricht, wodurch das Fahrrad währen des Schiebemodus' automatisch stabilisiert wird.

Zunächst wird im Flussdiagramm ein Aktivierungsstatus ACT für eine erfindungsgemäße Unterstützung eines Schiebemodus' des Fahrrades überprüft.

Für den Fall, dass der Aktivierungsstatus "1" entspricht, wird nachfolgend im Schritt 100 eine aktuelle Geschwindigkeit v des Fahrrades ermittelt. Zudem wird im Schritt 200 ein aktueller Neigungswinkel φ des Fahrrades ermittelt.

Ausgehend von Schritt 200 wird die aktuelle Geschwindigkeit v mit einem zweiten Schwellenwert S2 abgeglichen, welcher einer Mindestgeschwindigkeit für den Schiebemodus entspricht. Unterhalb des zweiten Schwellenwertes S2 sind die Geschwindigkeiten so niedrig, dass für ein erfolgreiches Stabilisieren des Fahrrads sehr große Stellenergien notwendig wären und ein stabiles Verhalten des Fahrrades daher nicht sichergestellt werden kann. Um dies zu vermeiden wird die Unterstützungsfunktion im unteren Geschwindigkeitsbereich entsprechend deaktiviert, indem der Aktivierungsstatus ACT im Schritt 500 auf "0" gesetzt wird. Zudem wird durch das Fahrrad im Schritt 600 ein akustischer Hinweis an einen Benutzer des Fahrrades ausgegeben, um auf eine automatische Deaktivierung der Unterstützungsfunktion hinzuweisen.

Für den Fall, dass die aktuelle Geschwindigkeit v hingegen oberhalb des zweiten Schwellenwertes S2 liegt, wird zunächst überprüft, ob sich die aktuelle Geschwindigkeit v dem zweiten Schwellenwert S2 annähert, indem die aktuelle Geschwindigkeit mit einem Wert verglichen wird, welcher aus einer Summe aus dem zweiten Schwellenwert S2 und einem ersten vordefinierten Deltawert x1 berechnet wird. Dies bietet den Vorteil, dass der Benutzer des Fahrrades bereits vor dem Erreichen des zweiten Schwellenwertes durch die aktuelle Geschwindigkeit v vor einer voraussichtlichen Deaktivierung der Unterstützungsfunktion gewarnt werden kann. Für den Fall, dass v < S2 + x1 zutrifft, wird entsprechend im Schritt 600 ein akustischer Hinweis an den Benutzer ausgegeben, welcher auf eine voraussichtliche zukünftige Deaktivierung der Unterstützungsfunktion hinweist. Anschließend wird das Verfahren im Schritt 300 fortgeführt, in welchem die oben beschriebene Regelung auf einen Neigungswinkel φ des Fahrrades von 0° ausgeführt wird. Die Regelung im Schritt 300 basiert auf der ermittelten aktuellen Geschwindigkeit v und dem ermittelten aktuellen Neigungswinkel φ.

Für den Fall, dass v < S2 + x1 nicht zutrifft, wird überprüft, ob sich die aktuelle Geschwindigkeit v an einen ersten Schwellenwert S1 annähert, welcher einen maximal zulässigen Wert für die Unterstützung im Schiebemodus repräsentiert. Für den Fall, dass in diesem Schritt v > S1 - x2 zutrifft, wobei x2 ein zweiter vordefinierter Deltawert ist, wird dementsprechend im Schritt 600 ein akustischer Hinweis an den Benutzer des Fahrrades ausgegeben, welcher auf eine voraussichtliche zukünftige Deaktivierung der Unterstützungsfunktion hinweist.

Für den Fall, dass in diesem Schritt v > S1 - x2 nicht zutrifft, wird als Nächstes überprüft, ob v > S1 zutrifft. Ist dies der Fall, so wird die Unterstützungsfunktion im Schritt 500 deaktiviert. Zudem wird im nachfolgenden Schritt 600 ein akustischer Hinweis an den Benutzer des Fahrrades ausgegeben, welcher auf die Deaktivierung der Unterstützungsfunktion hinweist.

Für den Fall, dass v > S1 nicht zutrifft, wird im Schritt 300 die Unterstützungsfunktion wie oben beschrieben regulär ausgeführt.

Für den Fall, dass der oben beschriebene Aktivierungsstatus ACT am Beginn des Flussdiagramms "0" entspricht, wird zunächst überprüft, ob eine Aktivierungsanforderung REQ durch den Benutzer des Fahrrades vorliegt, welche beispielsweise mittels einer Spracheingabe in ein Spracherkennungssystem des Fahrrades entgegengenommen wird.

Für den Fall, dass eine Aktivierungsanforderung REQ vorliegt, d. h., dass diese einem Wert von "1" entspricht, wird zunächst überprüft, ob ein aktueller Neigungswinkel φ des Fahrrades innerhalb eines vordefinierten maximal zulässigen Neigungswinkelbereichs φₘₐₓ liegt. Ist dies der Fall, wird weiter überprüft, ob sich die aktuellen Geschwindigkeit v des Fahrrades innerhalb eines vordefinierten Aktivierungsgeschwindigkeitsbereichs v_{act} befindet. Nur wenn beide vorgenannten Bedingungen erfüllt sind, wird anschließend im Schritt 400 der Aktivierungszustand ACT der Unterstützungsfunktion aktiviert, d. h., auf einen Wert von "1" gesetzt. In allen anderen Fällen wird die Funktion nicht aktiviert und das Verfahren wird im Schritt zur Überprüfung des Aktivierungszustandes ACT fortgeführt.

Durch die Überprüfung der vorgenannten Aktivierungsbedingungen kann sichergestellt werden, dass die Unterstützungsfunktion für den Schiebemodus nur unter solchen Randbedingungen aktiviert wird, unter denen eine zuverlässige Regelung des Neigungswinkels auf 0° möglich ist.

Es sei darauf hingewiesen, dass die vorstehend beschriebene Regelung verbessert werden kann, indem die Regelung zusätzlich auf Basis einer aktuellen Lenkrate erfolgt.

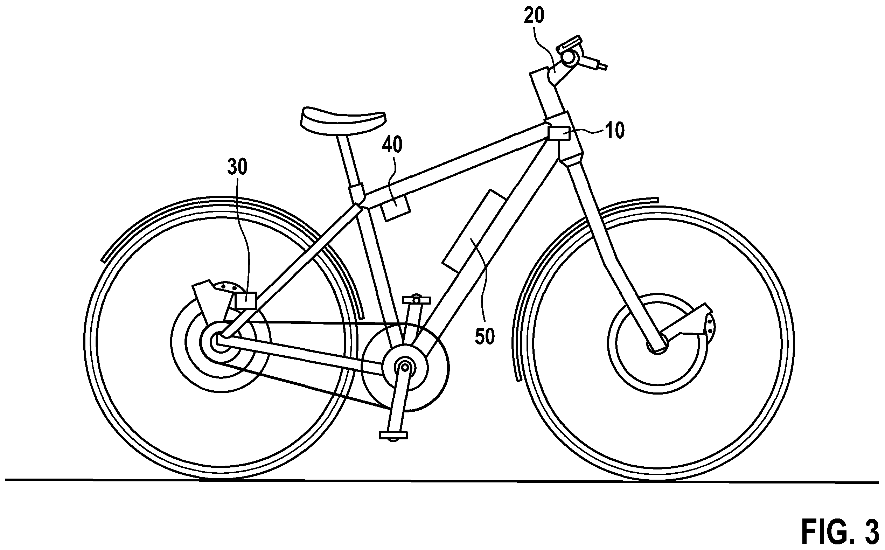

Figur 3 zeigt eine schematische Ansicht einer erfindungsgemäßen Vorrichtung in Verbindung mit einem Fahrrad. Die Vorrichtung weist einen Lenkaktor 10, einen Geschwindigkeitssensor 30 und einen Neigungswinkelsensor 40 auf, welche jeweils informationstechnisch mit einer Auswerteeinheit 50 der Vorrichtung verbunden sind, die hier als Mikrocontroller ausgebildet ist. Auf diese Weise ist die Auswerteeinheit 50 mittels einer PID-Regelung eingerichtet, als Reaktion auf eine Störkraft, die zu einer Neigungsänderung des Fahrrades geeignet ist, eine Kurvenfahrt des Fahrrads einzustellen, um die Störkraft zu kompensieren und die Neigung φ des Fahrrades auf einem vordefinierten Wert von 0° zu halten oder zu diesem vordefinierten Wert zu führen, ohne dass ein Benutzer des Fahrrades einen Lenker 20 des Fahrrades halten oder betätigen muss.

## Patentansprüche

1. Verfahren zur Unterstützung eines Schiebemodus' eines Fahrrades aufweisend:
• einen ersten Schritt (100) zum Ermitteln einer aktuellen Geschwindigkeit (v) des Fahrrades,
• einen zweiten Schritt (200) zum Ermitteln eines aktuellen Neigungswinkels (φ) des Fahrrades, und
• einen dritten Schritt (300) zum Ansteuern eines Lenkaktors (10) des Fahrrads in einem Schiebemodus zum Einstellen eines Lenkwinkels (δ) des Fahrrads basierend auf einer Information über die aktuelle Geschwindigkeit (v) und den aktuellen Neigungswinkel (φ), **dadurch gekennzeichnet, dass** das Verfahren wenigstens einen der folgenden weiteren Schritte aufweist:
• a) das Ansteuern des Lenkaktors (10) ein Einstellen eines Soll-Lenkwinkels (δₛ) des Fahrrades bewirkt, welcher basierend auf einer vordefinierten Abbildungsvorschrift (f₁, f₂) ermittelt (250) wird, die jeweilige Geschwindigkeits- und Neigungswinkelwerte auf jeweilige Soll-Lenkwinkelwerte abbildet, so dass das Fahrrad im Schiebemodus allein mittels eines durch einen Benutzer herbeigeführten Neigevorgangs entlang vorausliegender Kurven lenkbar ist, ohne dass ein Lenker des Fahrrades durch den Benutzer betätigt werden muss;
• b) das Ansteuern des Lenkaktors (10) basierend auf einer Regelung erfolgt, um den Neigungswinkel (φ) auf einen vordefinierten Wert, insbesondere auf 0°, zu regeln, wobei die Regelung eine Information über eine erfasste Neigungsrate des Fahrrades berücksichtigt, und/oder als Stellgröße zur Regelung des Neigungswinkels (φ) eine Lenkrate und/oder ein Lenkmoment verwendet wird;
• c) wenigstens im Ansprechen auf eine automatische Deaktivierung (500) der Unterstützungsfunktion für den Schiebemodus und/oder wenigstens zu einem vordefinierten Zeitpunkt vor der automatischen Deaktivierung der Unterstützungsfunktion, ein Hinweis an einen Benutzer des Fahrrades ausgegeben (600) wird.

2. Verfahren nach Anspruch 1, wobei wenn das Ansteuern des Lenkaktors (10) basierend auf einer Regelung erfolgt, um den Neigungswinkel (φ) auf einen vordefinierten Wert, insbesondere auf 0°, zu regeln, die Regelung als Reaktion auf eine Störkraft, die zur Neigungsänderung des Fahrrades geeignet ist, eine Kurvenfahrt des Fahrrads einstellt, um die Störkraft zu kompensieren und die Neigung (φ) auf dem vordefinierten Wert zu halten oder zu dem vordefinierten Wert zu führen.

3. Verfahren nach einem der vorstehenden Ansprüche weiter aufweisend
• Ermitteln eines aktuellen Lenkwinkels (δ) und/oder einer aktuellen Lenkrate des Fahrrades, und
• Berücksichtigen der Information über den aktuellen Lenkwinkel (δ) und/oder die Lenkrate bei der Ansteuerung des Lenkaktors (10).

4. Verfahren nach einem der vorstehenden Ansprüche, wobei der aktuelle Lenkwinkel (δ) auf Basis
• einer aktuellen Gierrate,
• von Fahrradparametern, welche insbesondere einen Radstand und/oder einen Lenkkopfwinkel und/oder einen Nachlauf des Fahrrades beinhalten, und
• der aktuellen Geschwindigkeit (v)
ermittelt wird.

5. Verfahren nach einem der vorstehenden Ansprüche, wobei eine maximale Auslenkung eines Lenkers (20) des Fahrrades durch den Lenkaktor (10) auf einen vordefinierten maximal zulässigen Lenkwinkelbereich beschränkt wird.

6. Verfahren nach einem der vorstehenden Ansprüche, wobei eine oder mehrere durch das Verfahren verwendete Messgrößen und/oder Ausgangsgrößen mittels einer Tiefpassfilterung (270) geglättet werden.

7. Verfahren nach einem der vorstehenden Ansprüche, wobei das Verfahren zur Unterstützung des Schiebemodus'
• nur dann ausgeführt wird, wenn die aktuelle Geschwindigkeit (v) einen ersten vordefinierten Schwellenwert (S1) nicht überschreitet, und/oder
• unter Verwendung einer ersten vordefinierten Ansteuerungsmethode (f₁) für den Lenkaktor ausgeführt wird, wenn die aktuelle Geschwindigkeit (v) den ersten Schwellenwert (S1) nicht überschreitet und einen zweiten vordefinierten Schwellenwert (S2) überschreitet, wobei der zweite Schwellenwert (S2) kleiner ist, als der erste Schwellenwert (S1), und/oder
• unter Verwendung einer von der ersten vordefinierten Ansteuerungsmethode (f₁) abweichenden zweiten Ansteuerungsmethode (f₂) für den Lenkaktor (10) ausgeführt wird oder nicht ausgeführt wird, wenn die aktuelle Geschwindigkeit (v) niedriger als der zweite Schwellenwert (S2) ist oder diesem entspricht.

8. Verfahren nach einem der vorstehenden Ansprüche, wobei das Verfahren zur Unterstützung des Schiebemodus' nur dann aktiviert (400) wird, wenn
• eine Freigabe (ACT) für diese Unterstützungsfunktion mittels einer Eingabe durch einen Benutzer des Fahrrades vorliegt, und/oder
• ein vordefinierter Neigungswinkelbereich (φₘₐₓ) des Fahrrades nicht überschritten wird, und/oder
• die aktuelle Geschwindigkeit (v) innerhalb eines vordefinierten Aktivierungsgeschwindigkeitsbereichs (v_{act}) liegt.

9. Verfahren nach einem der vorstehenden Ansprüche, wobei wenigstens im Ansprechen auf eine automatische Deaktivierung (500) der Unterstützungsfunktion für den Schiebemodus und/oder wenigstens zu einem vordefinierten Zeitpunkt vor der automatischen Deaktivierung der Unterstützungsfunktion, ein Hinweis an einen Benutzer des Fahrrades ausgegeben (600) wird.

10. Vorrichtung zur Unterstützung eines Schiebemodus' eines Fahrrades aufweisend:
• einen Lenkaktor (10),
• einen Geschwindigkeitssensor (30),
• einen Neigungswinkelsensor (40), und
• eine Auswerteeinheit (50),
wobei
• die Auswerteeinheit (50) eingerichtet ist,
o auf Basis des Geschwindigkeitssensors (30) eine aktuelle Geschwindigkeit (v) des Fahrrades zu ermitteln,
o auf Basis des Neigungswinkelsensors (40) einen aktuellen Neigungswinkel (φ) des Fahrrades zu ermitteln, und
o den Lenkaktor (10) des Fahrrades in einem Schiebemodus zum Einstellen eines Lenkwinkels (δ) des Fahrrades basierend auf einer Information über die aktuelle Geschwindigkeit (v) und den aktuellen Neigungswinkel (φ) gemäß dem Verfahren nach Anspruch 1-9 anzusteuern.

11. Fahrrad aufweisend eine Vorrichtung nach Anspruch 10.

## Claims

1. Method for supporting a walk mode of a bicycle, comprising:
• a first step (100) for determining a current speed (v) of the bicycle,
• a second step (200) for determining a current angle of inclination (ϕ) of the bicycle, and
• a third step (300) for activating a steering actuator (10) of the bicycle in a walk mode in order to adjust a steering angle (δ) of the bicycle on the basis of information about the current speed (v) and the current angle of inclination (ϕ), **characterized in that** the method comprises at least one of the following further steps:
• a) the activation of the steering actuator (10) causes an adjustment of a desired steering angle (δₛ) of the bicycle, which is determined (250) on the basis of a predefined mapping rule (f₁, f₂), which maps respective speed and angle of inclination values to respective desired steering angle values, such that the bicycle can be steered in the walk mode solely by means of a user-initiated inclination process along upcoming bends without the handlebars of the bicycle having to be operated by the user;
• b) the steering actuator (10) is activated on the basis of a control system in order to control the angle of inclination (ϕ) to a predefined value, in particular to 0°, the control system taking into account information about a recorded rate of inclination of the bicycle, and/or a steering rate and/or a steering torque is used as a control variable for controlling the angle of inclination (ϕ);
• c) at least in response to an automatic deactivation (500) of the support function for the walk mode and/or at least at a predefined time before the automatic deactivation of the support function, a notice is output (600) to a user of the bicycle.

2. Method according to Claim 1, wherein, when the steering actuator (10) is activated on the basis of a control system, in order to control the angle of inclination (ϕ) to a predefined value, in particular to 0°, the control system, in response to a disturbance force likely to change the inclination of the bicycle, adjusts a turning manoeuvre of the bicycle in order to compensate for the disturbance force and to keep the inclination (ϕ) to the predefined value or to guide same to the predefined value.

3. Method according to either of the preceding claims, furthermore comprising
• determining a current steering angle (δ) and/or a current steering rate of the bicycle, and
• taking into account the information about the current steering angle (δ) and/or the steering rate when activating the steering actuator (10).

4. Method according to any one of the preceding claims, wherein the current steering angle (δ) is determined on the basis of
• a current yaw rate,
• bicycle parameters, which in particular include a wheelbase and/or a steering head angle and/or a castor angle of the bicycle, and
• the current speed (v)

5. Method according to any one of the preceding claims, wherein a maximum deflection of the handlebars (20) of the bicycle by the steering actuator (10) is limited to a predefined maximum permissible steering angle range.

6. Method according to any one of the preceding claims, wherein one or more measured variables and/or output variables used by the method are smoothed out by means of low-pass filtering (270).

7. Method according to any one of the preceding claims, wherein the method for supporting the walk mode
• is only carried out if the current speed (v) does not exceed a first predefined threshold (S1), and/or
• is carried out using a first predefined activation method (f₁) for the steering actuator when the current speed (v) does not exceed the first threshold value (S1) and exceeds a second predefined threshold value (S2), the second threshold value (S2) being smaller than the first threshold value (S1), and/or
• using a second activation method (f₂) different from the first predefined activation method (f₁) for the steering actuator (10) is carried out or is not carried out if the current speed (v) is lower than or corresponds to the second threshold value (S2).

8. Method according to any one of the preceding claims, the method for supporting the walk mode is activated (400) only when
• this support function is enabled (ACT) by means of an input by a user of the bicycle, and/or
• a predefined angle of inclination range (ϕₘₐₓ) of the bicycle is not exceeded, and/or
• the current speed (v) lies within a predefined activation speed range (v_{act}).

9. Method according to any one of the preceding claims, wherein at least in response to an automatic deactivation (500) of the support function for the walk mode and/or at least at a predefined time before the automatic deactivation of the support function, a notice is output (600) to a user of the bicycle.

10. Device for supporting a walk mode of a bicycle, comprising:
• a steering actuator (10),
• a speed sensor (30),
• an angle of inclination sensor (40), and
• an evaluation unit (50),
wherein
• the evaluation unit (50) is designed
o to determine a current speed (v) of the bicycle on the basis of the speed sensor (30),
o to determine a current angle of inclination (ϕ) of the bicycle on the basis of the angle of inclination sensor (40), and
o to activate the steering actuator (10) of the bicycle in a walk mode for adjusting a steering angle (δ) of the bicycle on the basis of information about the current speed (v) and the current angle of inclination (ϕ) according to the method according to Claims 1-9.

11. Bicycle comprising a device according to Claim 10.

## Revendications

1. Procédé de prise en charge d'un mode de marche d'une bicyclette, comportant :
• une première étape (100) de détermination d'une vitesse (v) actuelle de la bicyclette,
• une deuxième étape (200) de détermination d'un angle d'inclinaison (ϕ) de la bicyclette, et
• une troisième étape (300) de pilotage d'un actionneur de direction (10) de la bicyclette dans un mode de marche pour régler un angle de direction(δ) de la bicyclette sur la base d'informations sur la vitesse (v) actuelle et l'angle d'inclinaison (ϕ) actuel, **caractérisé en ce que** le procédé comporte au moins une des autres étapes suivantes :
• a) le pilotage de l'actionneur de direction (10) entraîne un réglage d'un angle de direction de consigne (δₛ) de la bicyclette, lequel est déterminé (250) sur la base d'une spécification de représentation (f₁, f₂) prédéfinie, qui représente les valeurs respectives de vitesse et d'angle d'inclinaison sur des valeurs de consigne d'angle de direction respectives, de telle sorte que la bicyclette dans le mode de marche peut être dirigée le long de courbes en avant uniquement au moyen d'un processus d'inclinaison provoqué par un utilisateur, sans que le guidon de la bicyclette ne doive être actionné par l'utilisateur ;
• b) le pilotage de l'actionneur de direction (10) est effectué sur la base d'une régulation pour réguler l'angle d'inclinaison (φ) sur une valeur prédéfinie, en particulier sur 0°, la régulation prenant en compte des informations sur un taux d'inclinaison détecté de la bicyclette, et/ou un taux de direction et/ou un couple de direction étant utilisés comme grandeur de réglage pour la régulation de l'angle d'inclinaison (φ) ;
• c) une indication est envoyée (600) à un utilisateur de la bicyclette au moins en réponse à une désactivation automatique (500) de la fonction de prise en charge pour le mode de marche de vitesse et/ou au moins à un moment prédéfini avant la désactivation automatique de la fonction de prise en charge.

2. Procédé selon la revendication 1, la régulation en réponse à une force perturbatrice, qui est adaptée pour changer l'inclinaison de la bicyclette, réglant la conduite dans les virages de la bicyclette pour compenser la force perturbatrice et pour maintenir l'inclinaison (φ) sur la valeur prédéfinie ou la mener à la valeur prédéfinie, lorsque l'actionneur de direction (10) est piloté sur la base d'une régulation pour réguler l'angle d'inclinaison (φ) sur une valeur prédéfinie, en particulier sur 0°.

3. Procédé selon l'une des revendications précédentes, comportant par ailleurs
• détermination d'un angle de direction (δ) actuel et/ou d'un taux de direction actuel de la bicyclette, et
• prise en compte des informations sur l'angle de direction (δ) actuel et/ou sur le taux de direction lors du pilotage de l'actionneur de direction (10).

4. Procédé selon l'une des revendications précédentes, l'angle de direction (δ) actuel étant déterminé sur la base
• d'un taux de lacet actuel,
• de paramètres de bicyclette, qui renferment en particulier un empattement et/ou un angle de tête de direction et/ou un suivi de la bicyclette, et
• de la vitesse (v) actuelle.

5. Procédé selon l'une des revendications précédentes, une déviation maximale d'un guidon (20) de la bicyclette par l'actionneur de direction (10) étant restreinte à une plage d'angle de direction maximale autorisée prédéfinie.

6. Procédé selon l'une des revendications précédentes, une ou plusieurs grandeurs de mesure et/ou grandeurs de sortie utilisées par le procédé étant lissées au moyen d'un filtrage passe-bas (270).

7. Procédé selon l'une des revendications précédentes, le procédé de prise en charge du mode de marche
• n'étant exécuté que lorsque la vitesse (v) actuelle ne dépasse pas une première valeur de seuil (S1) prédéfinie, et/ou
• étant exécuté en utilisant une première méthode de pilotage (f₁) prédéfinie pour l'actionneur de direction lorsque la vitesse actuelle (v) ne dépasse pas la première valeur de seuil (S1) et dépasse une deuxième valeur de seuil (S2) prédéfinie, la deuxième valeur de seuil (S2) étant inférieure à la première valeur de seuil (S1), et/ou
• étant exécuté ou n'étant pas exécuté en utilisant une deuxième méthode de pilotage (f₂) pour l'actionneur de direction (10) différente de la première méthode de pilotage (f₁) prédéfinie lorsque la vitesse (v) actuelle est inférieure à la deuxième valeur de seuil (S2) ou correspond à celle-ci.

8. Procédé selon l'une des revendications précédentes, le procédé de prise en charge du mode de marche n'étant activé (400) que
• lorsqu'une validation (ACT) de ladite fonction de prise en charge au moyen d'une entrée par un utilisateur de la bicyclette est présente, et/ou
• une plage d'angle d'inclinaison prédéfinie (ϕₘₐₓ) de la bicyclette n'est pas dépassée, et/ou
• la vitesse (v) actuelle se situe dans une plage de vitesses d'activation prédéfinie (v_{act}).

9. Procédé selon l'une des revendications précédentes, une indication étant envoyée (600) à un utilisateur de la bicyclette au moins en réponse à une désactivation automatique (500) de la fonction de prise en charge pour le mode de marche et/ou au moins à un moment prédéfini avant la désactivation automatique de la fonction de prise en charge.

10. Dispositif de prise en charge d'un mode de marche d'une bicyclette, comportant :
• un actionneur de direction (10),
• un capteur de vitesse (30),
• un capteur d'angle d'inclinaison (40), et
• une unité d'évaluation (50),
• l'unité d'évaluation (50) étant mise au point pour
o déterminer une vitesse (v) actuelle de la bicyclette à partir du capteur de vitesse (30),
o déterminer un angle d'inclinaison (φ) actuel de la bicyclette sur la base du capteur d'angle d'inclinaison (40), et
o piloter l'actionneur de direction (10) de la bicyclette dans un mode de marche pour régler un angle de direction (δ) de la bicyclette sur la base d'informations sur la vitesse (v) actuelle et l'angle d'inclinaison (φ) actuel selon le procédé selon les revendications 1 à 9.

11. Bicyclette comportant un dispositif selon la revendication 10.
